# EUROPEAN PATENT SPECIFICATION

(11) **EP 2 343 867 B1**
(45) Date of publication and mention of the grant of the patent: **28.03.2012**
(21) Application number: 10015787.4
(22) Date of filing: 17.12.2010
(51) Int. Cl.: H04L 29/08

(54) **System and method of reducing intranet traffic on bottleneck links in a telecommunications network**
System und Verfahren zur Reduzierung des Intranetverkehrs an Engpass-Links in einem Telekommunikationsnetzwerk
Système et procédé de réduction de trafic intranet sur des liens de goulot d'étranglement dans un réseau de télécommunication

(30) Priority: 12.01.2010 US 686029
(43) Date of publication of application: 13.07.2011
(73) Proprietor: Telefonaktiebolaget LM Ericsson (publ), 164 83 Stockholm (SE)
(72) Inventor: Mihály, Attila, Dunakeszi 2120 (HU); Tóth, Zoltán, Sárbogárd 7000 (HU)
(74) Representative: Röthinger, Rainer

(56) References cited:
- WO-A2-03/102779
- US-A- 5 570 366
- US-B1- 6 622 167

## Description

### BACKGROUND

The present invention relates to communications networks. More particularly, and not by way of limitation, the present invention is directed to a system and method of reducing intranet traffic on bottleneck links in a telecommunications network. To provide interconnectivity in multi-site private networks, VPN tunnels must generally be set up between sites that will guarantee separation of the traffic from other traffic on the Internet or the connectivity provider's network. In order to simplify network provisioning for the access of remote devices, these tunnels may be layer-2 transparent tunnels, such as EtherIP or Layer 2 Tunneling Protocol (L2TP).

Most current networks deploy personal computers and servers running Microsoft Windows^{®} and are often referred to as "Microsoft Windows^{®} Network". These networks use an application-level network protocol called Server Message Block (SMB) to provide shared access to files, printers, serial ports, and miscellaneous communications between the nodes in the network. SMB also provides an authenticated Inter-process communication mechanism.

In addition, there are other schemes available for non-Windows based computers to be part of Microsoft Windows^{®} networking. For example, Samba is a free software re-implementation of Service Message Block/Common Internet File System (SMB/CIFS) networking protocol. Samba, is a suite of programs running under UNIX-like operating systems that provide seamless integration between UNIX and Windows computers. SMB clients also exist for Mac Operating System (OS). Local file access into a networked file system is also possible in pure Unix environment using Network File System (NFS) protocol or MAC OS using Apple filing Protocol.

The problem with the above-mentioned protocols is that they are not optimized for efficient transport resource usage, resulting in a large number of exchanged protocol messages. Additionally, shared file access results in a large volume of traffic generated on a LAN. This becomes a problem when there is a bottleneck link on the network. An example of such a link is a Wifi connection between two buildings of the same company. Another example is the cellular link provided by a mobile operator in the Network As a Service (NAS) service.

Problems related to the broadcast traffic on a bottleneck link in a LAN environment is a known issue. For example, U.S. Patent No. 5,570,366 to Baker et al. discloses a method where an entity infers which network elements reside on either side of the bottleneck link and performs some filtering of the unnecessary broadcast traffic. However, a majority of the SMB and Universal Plug and Play (UPnP) messages are unicast for which this particular method cannot be used.

Measurements show that latency has a significant impact on the performance of the SMB protocol. Monitoring reveals that this occurs most commonly in cases of navigating among directories through SMB when significant network latency exists between hosts. For example, a Virtual Private Networking (VPN) connection over the Internet will often introduce network latency, which is not desirable.

As discussed above, methods, such as proposed in U.S. Patent No. 5,570,366, may be used for reducing the broadcast traffic over the LAN. There are scenarios, however, when there is not much broadcast traffic related to SMB or other LAN protocols. For example, broadcast messages in SMB originate from the Network Basic Input/Output System (NetBIOS) service location protocol. By default, a Microsoft Windows^{®} server will use NetBIOS to advertise and locate services. NetBIOS actually functions by broadcasting services available on a particular host at regular intervals. While this usually provides for an acceptable default in a network with fewer than twenty hosts, broadcast traffic will cause problems as the number of hosts increases. A proper implementation of a NetBIOS Name Server (NBNS) can mitigate this problem. For example, Windows^{®} Internet Naming Service (WINS) offers a suitable solution in Microsoft^{®} environments.

The potential problems related to transmitting a high volume of unicast SMB traffic (e.g., file sharing) over bottleneck links have been recognized also in International Publication No. WO/2003/102779. However, WO/2003/102779 discloses a host-based caching solution to solve the problem. This solution suffers from the disadvantage that there may be many hosts in the network of different types (hardware, operating system, etc.) that make the generic utilization of that method at least difficult, if not impossible, to implement. A system and method are needed which provides a new functionality in a single node that may reduce the traffic and improve characteristics for all hosts on a given LAN segment.

### SUMMARY

The present invention is a system and method of reducing intranet traffic on bottleneck links in a telecommunications network. The present invention includes a method for reducing traffic between two LAN segments of a network where the link between two segments is a bottleneck link (e.g., a wireless link).

In one aspect, the present invention is directed at a method in a telecommunications network that reduces intranet traffic between two Local Area Network (LAN) segments according to claim 1. There is a bottleneck link between the LAN segments. An initiator host requests an object from a host at a remote end of the bottleneck link and the request is sent to the remote host via an edge node.

The traffic on the bottleneck link may be such that the remote host needs to be masqueraded. Masquerading the remote host comprises the edge node substituting the edge node's address for the remote host and sending it to the initiator host instead fo the remote host address.

The edge node then verifies whether the requested object, on the remote host, is up to date and stored in a cache associated with the edge node. If the requested object is stored in the edge node cache, the edge node sends the up to date object to the requesting initiator node. If the requested object in the cache is not up to date, the edge node retrieves the up to date object from the remote host, stores it in the cache and sends the up to date requested object to the initiator host.

In another aspect, the present invention is directed at a system in a telecommunications network, for reducing intranet traffic between two Local Area Network (LAN) segments where a link between the two LAN segments is a bottleneck link according to claim 17.

An initiator host sends a request for an object from a host at a remote end (remote host) of the bottleneck link and this request is sent to the remote host via an edge node. The edge node has a means of checking the traffic in the bottleneck link and in order to keep the traffic down, The edge node monitors the traffic in the bottle neck link and if the link requires the remote host to be masqueraded, the edge node sends the edge node address to the initiator host instead of the remote host address. Then the object requested by the initiator host and also stored in an edge node cache, is checked to make sure the requested object is up to date.

If the requested object is up to date, the edge node sends the requested object from the cache. However, it the requested object is not up to date, the edge node retrieves an up to date object from the remote node, stores it in the edge node's cache and sends the up to date object to the initiator host.

In still another aspect, the present invention is directed at an edge node in a telecommunications network, for reducing intranet traffic between two Local Area Network (LAN) segments where a link between the two LAN segments is a bottleneck link according to claim 8, comprising means for receiving from an initiator host a request for an object from a host at a remote end (remote host) of the bottleneck link and sending the request to the remote host. However, the edge node has checks the traffic on the bottleneck link to determine whether the remote host needs to be masqueraded.

If the remote host needs to be masqueraded, the edge node responds to the request from the initiator host by sending the edge node address instead of the remote host address. The edge node then checks to make sure the requested object is up to date and stored in the edge node cache. If the object is up to date, the edge node sends the object to the initiator node. If the object is not up to date, the edge node retrieves the up to date object from the remote host and sends the up to date object to the initiator host.

### BRIEF DESCRIPTION OF THE DRAWINGS

In the following section, the invention will be described with reference to exemplary embodiments illustrated in the figures, in which:
- FIG. 1: is a simplified block diagram of a telecommunications system in one embodiment of the present invention;
- FIG. 2: is a simplified block diagram illustrating the process of downloading a remote object which does not exist in the cache of the local edge node;
- FIG. 3: is a simplified block diagram illustrating the process of downloading a remote object which exists in the local cache;
- FIGs. 4A and 4B: are flowcharts illustrating the steps of the method of transferring a request object from a remote host according to the teachings of the present invention;
- FIG. 5: is a signalling diagram illustrating the procedure of downloading a remote object which does not exist in the cache of the local edge node;
- FIG. 6: is a signalling diagram illustrating the procedure of downloading a remote object which exists in the cache of the local edge node;
- FIG. 7: is a simplified block diagram illustrating LMB election where the LMB is operating in a network; and
- FIG. 8: is a flowchart illustrating the steps of Local Master Brower election in another embodiment of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

The present invention is a system and method of reducing intranet traffic on bottleneck links in a telecommunications network. The present invention includes a method for reducing traffic between two LAN segments of a network where the link between two segments is a bottleneck link (e.g., a wireless link). The term 'edge node' refers to a node connecting to the bottleneck link. The present invention provides traffic reduction between the LAN segments whereby the edge nodes masquerade the remote file server(s) at the remote end of the bottleneck link without breaking layer 2 transparency using a cache mechanism. In another embodiment, the present invention provides a method to save bandwidth where there is a designated Local Control Node for spreading information about the hosts in the network. The method consists of electing one local control node for spreading information for each LAN segment, instead of having one such global node for the entire LAN. The SMB defines such a designated host as a Local Master Browser (LMB), which stores name and address information about the hosts in the whole network. According to the default behavior of SMB, there is one such LMB node on the entire Intranet. The LMB is elected automatically by the hosts.

In a first embodiment of the present invention, the edge nodes masquerade the remote file server(s) at the remote end of the bottleneck link, without breaking layer 2 transparency, using a cache mechanism. "Masquerading" a remote host is where an edge node emulates a host along with the emulated host's shared files in the local LAN segment, while hiding the original host's address and location. This is accomplished in two steps. First, the edge node identifies itself as the remote host upon request. Second, the edge node stores requested shared files of the remote host in a cache.

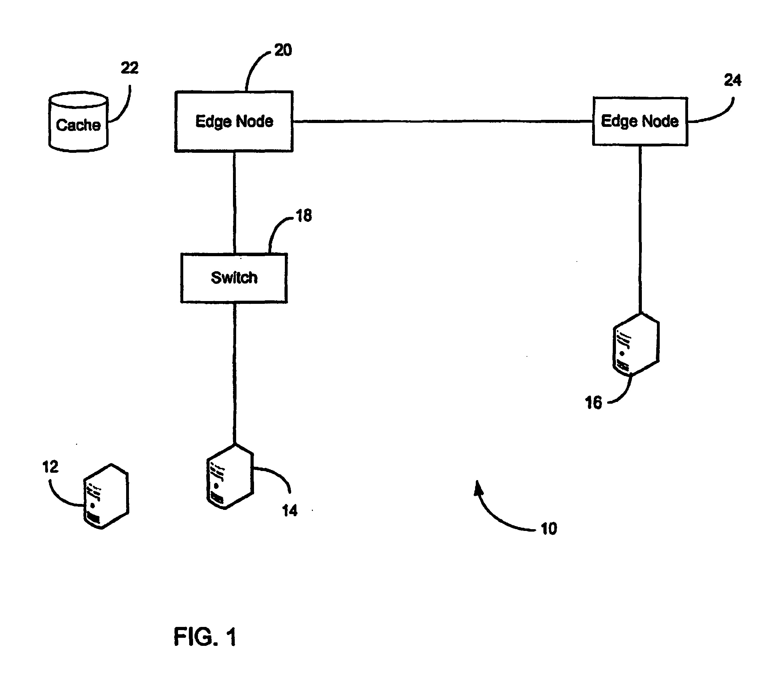

FIG. 1 is a high level block diagram of a telecommunications system 10 in one embodiment of the present invention. The system includes a plurality of hosts 12, 14, and 16. As depicted, host 12 is an initiator host and host 16 is a remote host. Hosts 12 and 14 communicate through a switch 18 to an edge node 20. The edge node 20 has a cache 22. The edge node 20 communicates with the remote host 16 through a switch 24. The number and configuration of the various components of the system 100 may vary from the system depicted in FIG. 1 and still remain within the scope of the present invention. There are several options for selecting the remote hosts which should be masqueraded by the edge node 20, e.g., by configuration in the edge node. In one embodiment, the edge node has a static list of Internet Protocol (IP) addresses of all remote hosts that need to be masqueraded. If there's a dedicated file server in the network, it may be enough to masquerade only that particular host. The static configuration may be the only option for Network File System (NFS) or similar protocols, where the network hosts are not running an automatic host discovery protocol. The first step, however, can be accomplished automatically when using a host discovery mechanism, such as in SMB-based networks. In this case, each remote host may be considered a potential file server. Thus, the edge node may be able to masquerade all remote hosts. When the edge node receives a "searching for communication capable hosts" message originating from a local host, the edge node sends its own identification (e.g., IP address) on behalf of each remote host that needs to be masqueraded. In the second step, the data transfer requires the use of the local cache 22. In one embodiment, two communication sessions are established, one between the initiator host 12 and its local edge node 20, and another session between the edge node 20 and the masqueraded remote host 16. Upon each request of the initiator host (e.g., list of shared objects, file download, etc.), the edge node verifies the edge node's cache 22 for the remote host 16. This may be achieved, for example, by querying the remote host about the requested object's time stamp (e.g., last modification time), and checking if it matches the time stamp that the edge node possesses. If the cache is outdated or the edge node does not have the requested object, the edge node may download and store the object in the cache. Subsequently, after this object is stored in the cache, the requested object is sent to the initiator host 12.

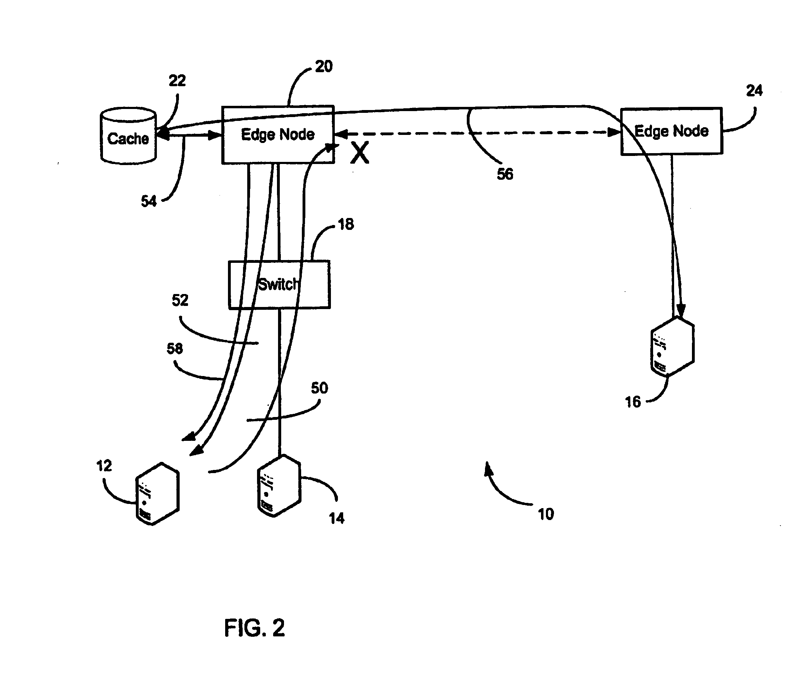

FIG. 2 is a simplified block diagram illustrating the process of downloading a remote object which does not exist in the cache 22 of the local edge node 20. First, the initiator host 12 requests host address information at 50. The edge node 20 then responds by sending a host address information response at 52. The edge node 20 also checks the cache 22 to determine if a requested object is present at 54. In this scenario, the cache does not have the requested object. The edge node then requests and receives the requested object for storage in its cache 22 at 56. The edge node then sends the requested object at 58.

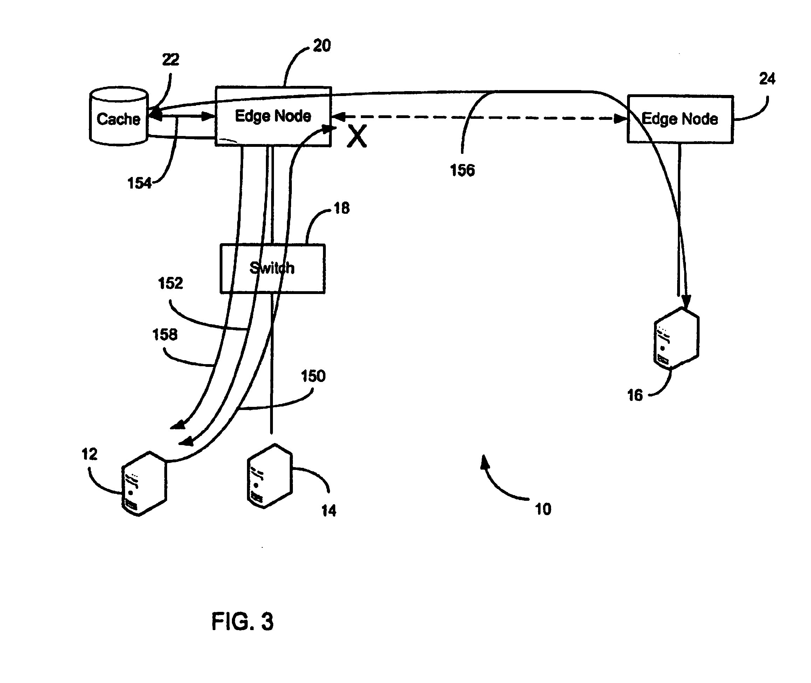

FIG. 3 is a simplified block diagram illustrating the process of downloading a remote object which exists in the local cache 22. First, the initiator host 12 requests host address information at 150. The edge node 20 then responds by sending a host address information response at 152. The edge node 20 also checks the cache 22 to determine if a requested object is present at 154. In this case, the cache has the requested object. Next, the edge node determines if the object stored in the cache 22 has the current timestamp of the object stored in the remote host 16 at 156. If the object is valid, the cache 22 then transfers the requested object through the edge node 22 at 158 to the initiator host 12. However, if the object in the cache is not valid, the edge node retrieves the object from the host 16 as discussed in FIG. 2.

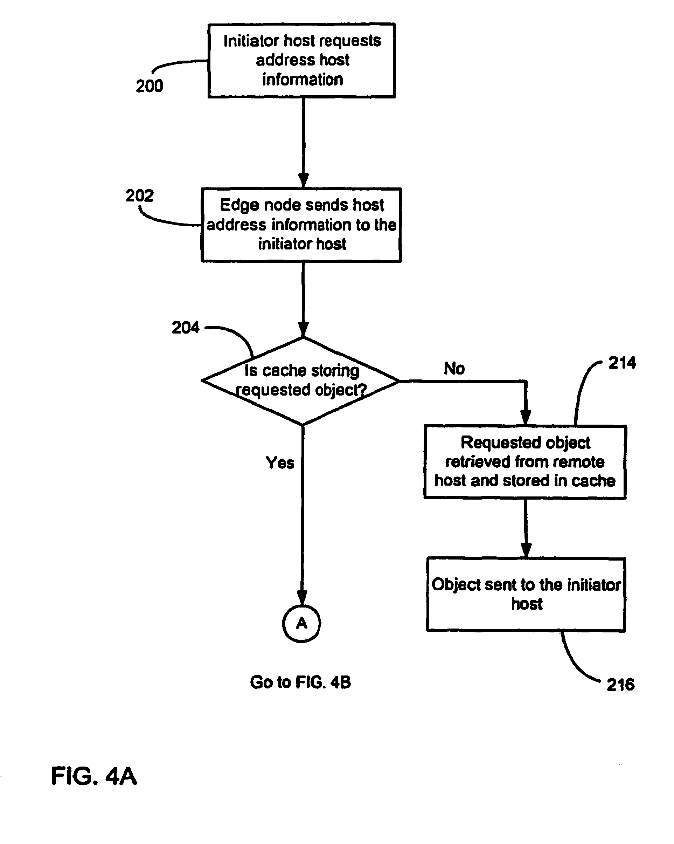

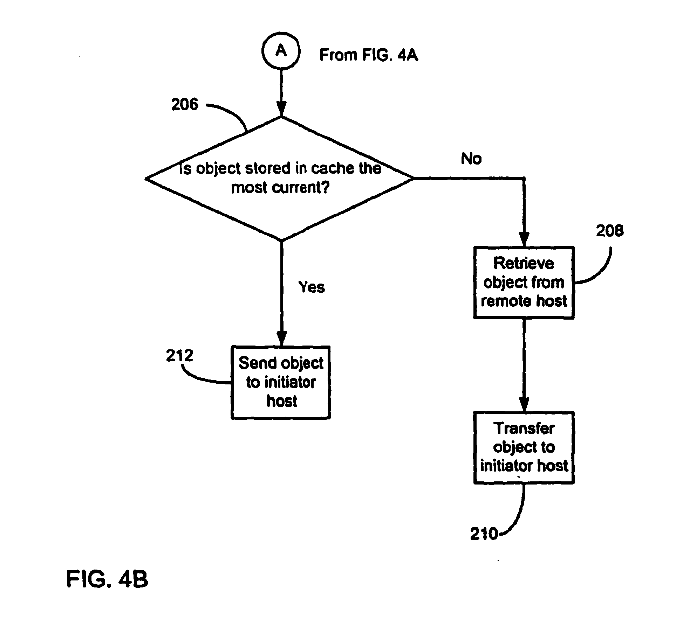

FIGs. 4A and 4B are flowcharts illustrating the steps of the method of transferring a request object from a remote host according to the teachings of the present invention. With reference to FIGs. 1-4, the method will now be explained. In step 200, the initiator host 12 requests a remote object by sending a host address information request to the edge node 20. In step 202, the edge node 20 sends the host address information of the requested object to the initiator host 12. Next, in step 204, it is determined if the cache is storing the requested object. If it is determined that the cache is storing the requested object, the method moves to step 206 where it is determined if the object stored in the cache 22 is the most current object (i.e., the validity of the object). In one embodiment, the edge node verifies that the timestamp of the stored object in the cache matches the timestamp of the object in the remote host 16. If it is determined in step 206 that the stored object in the cache is outdated, the edge node retrieves an updated object for storage in the cache in step 208. Next, in step 210, the updated object stored in the cache is transferred to the initiator host 12.

However, in step 206, if it is determined that the object in the cache is the most current, the edge node sends the object stored in the cache to the initiator host 12 in step 212. In step 204, if it is determined that the cache does not have the requested object, the method moves to step 214 where the requested object is retrieved from the remote host 16 and stored in the cache 22. In step 216, the object is then sent from the edge node to the initiator host 12.

In one embodiment, the remote host may be masqueraded in a system using the Server Message Block (SMB) protocol. The SMB protocol defines a designated host called a Local Master Browser (LMB), which stores name and address information about the hosts in the network. According to the default behaviour of SMB, there is one LMB node for the entire Intranet. Typically, the LMB is elected automatically by the hosts. When browsing the network, the initiator host 12 may turn to the LMB first for the list of the available hosts in the network. The LMB sends the hosts' names upon the request, and the initiator host chooses a specified host for communication.

The procedure of "masquerading" a remote host may begin when the edge node 20 receives a host announcement message from a remote host 16 indicating the need to be masqueraded. The name and IP address of the remote host 16 is stored before forwarding the packet towards the LMB. In addition, storage space is allocated for the remote host. In the case when the edge node is also the LMB for the local LAN segment, there is no need to forward the announcement message. In the case where SMB is utilized, the identification of all remote hosts may be conducted automatically by the edge node.

When a host initiates a communication session with another node in the network, the host first requests address information. The SMB protocol utilizes a name resolution method, similarly to Domain Name System (DNS) to obtain the address information for the initiator host 12. The host 12 sends a broadcast message (e.g., name query) in order to obtain the IP address of the chosen host from its name.

For example, it is assumed that the requested host is masqueraded. In this case, the edge node responds to the address message request with its own IP address without forwarding the message to other LAN segments. Subsequently, the data transfer (e.g., the caching method discussed in FIGs. 2-4) is the same as discussed above. In general, two communication sessions are established, one between the initiator host and the edge node, and another one between the edge node and the masqueraded remote host. Upon each request of the initiator host, the edge node verifies the requested object's timestamp by querying the remote host. The edge node downloads and stores the requested object when needed, and finally sends it to the initiator host.

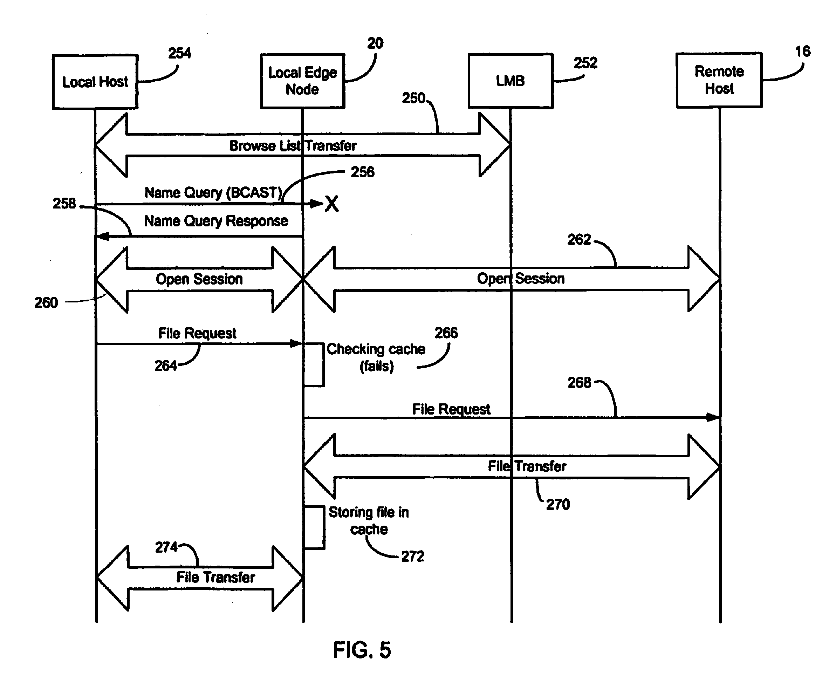

FIG. 5 is a signalling diagram illustrating the procedure of downloading a remote object which does not exist in the cache of the local edge node. In 250, a browse list transfer is conducted between an LMB 252 and a local host (initiator host) 254. A 'browse list' is simply a list of machine names on the LAN collected and stored in the LMB. When a new host boots on the LAN, it sends an announcement to the Local Master Browser so it is appended to the list. The announcement is repeated frequently, in the beginning, but settles down to once every 12 minutes. If the host is then turned off, the LMB waits for three announcement cycles before removing the host from the browse list. In 256, a broadcast message (e.g., Name Query) is sent and received by a local edge node 20. The edge node responds by sending a Name Query response at 258. A first open communication session is then established at 260 between the local host 254 and the edge node 20. Additionally, an open communication session 262 is established between the edge node 20 and the remote host 16. The local host 254 then requests a specified file (object) to the edge node 20 in 264. The edge node then checks to determine if the file is present in the cache at 266. In this depicted scenario, the edge node determines that the cache does not possess the requested file. Next, the edge node 20 requests the file from the remote host 16 in 268. A file transfer is then conducted from the remote host 16 to the edge node 20 at 270. The file is then stored in the cache 22 in 272. Next, the file is transferred from the edge node 20 to the local host 254 at 274.

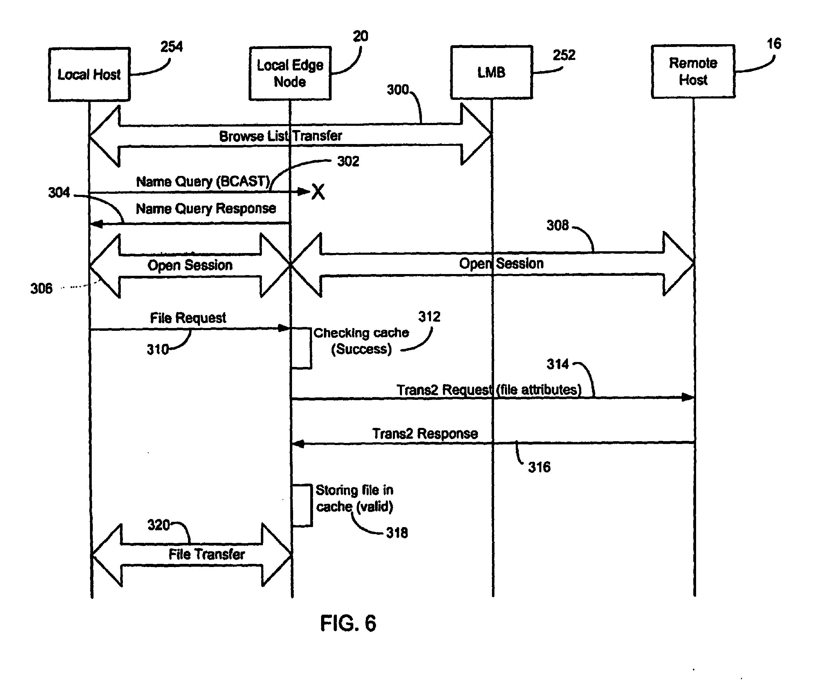

FIG. 6 is a signalling diagram illustrating the procedure of downloading a remote object which exists in the cache 22 of the local edge node 20 according to an embodiment of the present invention. In 300, a browse list transfer is conducted between an LMB 252 and a local host (initiator host) 254. In 302, a broadcast message (e.g., Name Query) is sent and received by a local edge node 20. The edge node responds by sending a Name Query response at 304. A first open communication session is then established at 306 between the local host 254 and the edge node 20. Additionally, an open communication session 308 is established between the edge node 20 and the remote host 16. The local host 254 then sends a request for a specified file (object) to the edge node 20 in 310. The edge node then checks to determine if the file is present in the cache at 312. The edge node determines that the cache does possess the requested file. Next, the edge node 20 sends a Trans2 Request (i.e., file attributes) to determine if the stored file is valid at 314. Next, a Trans2 Response is sent with the most current file attributes at 316. At 318, the local edge node determines if the stored file is valid by checking the file timestamp. If the stored file is not valid, the local edge network may obtain the current file (not shown in FIG. 6) as discussed at 268, 270, and 272 of FIG. 5. Next, the file is transferred from the edge node 20 to the local host 254 in 320.

In another embodiment, the present invention provides for the election of the LMB when SMB is used in the network. As discussed above, according to the default behaviour of SMB, there is one LMB node on the entire Intranet. The LMB is elected automatically. The present invention provides for a method and system of electing one local LMB for each LAN segment, rather than having one global LMB node. The selection of an LMB for each LAN segment results in a savings in bandwidth on the bottleneck link. This is because, in the typical case, when there is only one LMB for the entire Intranet, the list of the available hosts on the network is sent on the bottleneck link upon each request originated from a LAN segment other than the LAN segment to which the LMB is connected.

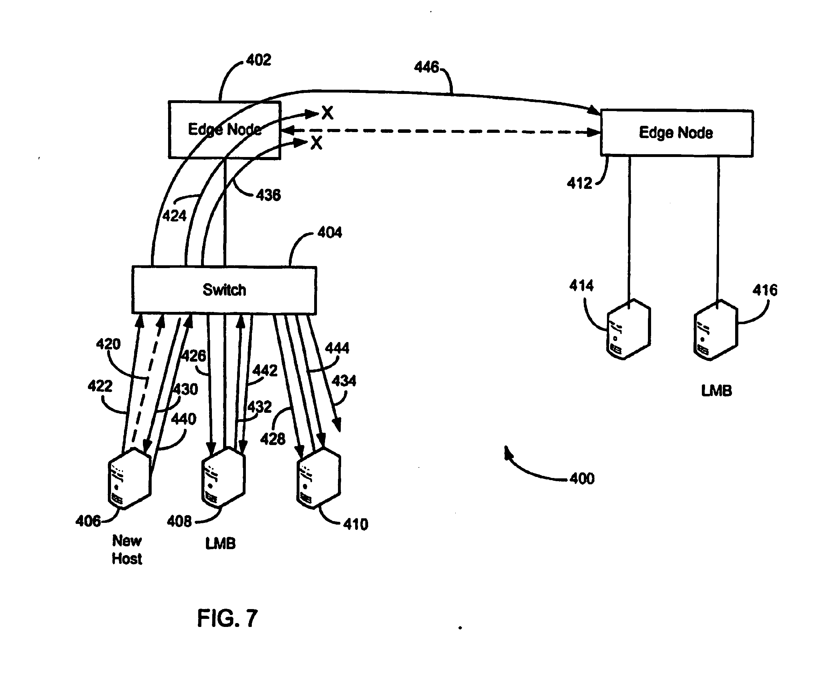

FIG. 7 is a simplified block diagram illustrating LMB election where the LMB is operating in a network 400 in another embodiment of the present invention. The network includes an edge node 402, a switch 404 communicating with a new host 406, an LMB 408, and another host 410. The network also includes another switch 412 communicating with a host 414 and a second LMB 416. The present invention performs the LMB selection when the new host connects to the network at 420. At this time, a Browser Election Request is broadcast between the new host and the switch at 422, the switch 404 and the edge node 402 at 424, the switch and the LMB at 426 and the switch and the host 410 at 428. If an LMB already exists in the local segment, it announces itself with a Local Master Announcement message. As depicted in Fig. 7, the Local Master Announcement message is sent from the switch 404 to the new host 406 at 430, between the switch 404 and the LMB 408 at 432, between the switch 404 and the host 410 at 434, and from the switch 404 to the edge node 402 at 436. The newly connected host 406 stores the IP address of the LMB 408, and sends a Host Announcement message in order to log in at the LMB. As depicted in FIG. 7, the Host Announcement message is sent from the new host 406 to the switch 404 at 440, from the switch 404 to the LMB 408 at 442, from the switch 404 to the host 410 at 444, and from the switch 404 to the switch 412 through the edge 402 at 446. This message is transmitted by the edge network 20 over the bottleneck link.

Preferably, the Browser Election Request and Local Master Announcement messages which are originated from local hosts are prevented from sending to other segments by the edge node 402 with a firewall rule or similar mechanism. Therefore, these messages are only broadcast in the local LAN segment, making it possible for hosts to elect an LMB in each segment independently. However, Host Announcement messages are preferably not filtered out. Thus, the Host Announcement messages are received by every LMB. In this fashion, they are able to maintain a list of all available hosts in the network, including remote hosts. On the other hand, each host only knows its local LMB without having information about other LMBs in the network. Therefore, when browsing the network, the host downloads the list of the available hosts from the local LMB only.

Preferably, an LMB announces itself periodically to ensure its presence (keep-alive) is known by the other hosts. In the case of failure or switching off the LMB, a new LMB is preferably elected on the given LAN segment according to standard SMB functionality (without having any effect on the remote segments).

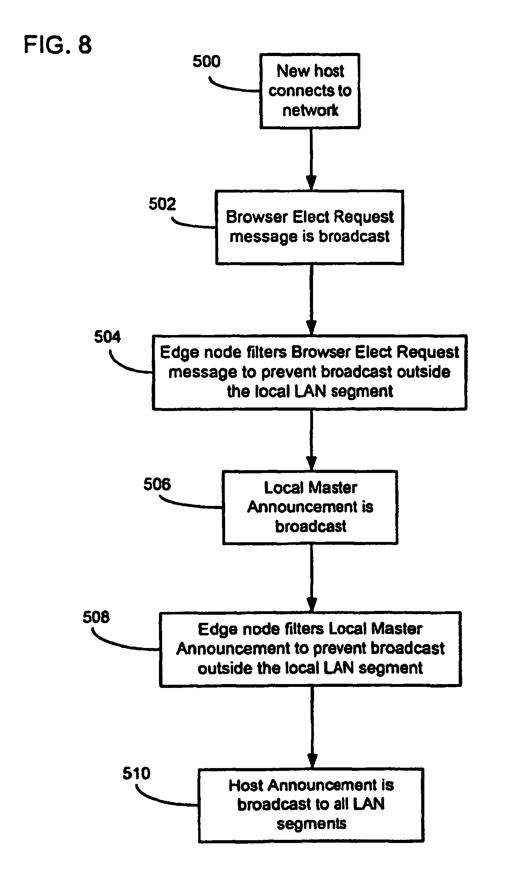

FIG. 8 is a high level flowchart illustrating the steps of Local Master Brower election in another embodiment of the present invention. With reference to FIGs. 7 and 8, the steps in the flowchart will now be explained. In step 500, the new host 406 connects to the network 400. Next, in step 502, a Browser Elect Request message is broadcast. In step 504, the edge node 402 filters out the Browser Elect Request message to prevent broadcasting outside the local LAN segment. Therefore, the Browser Elect Request message is only broadcast in the local LAN. In step 506, a Local Master Announcement message is broadcast. In step 508, the edge node 402 filters out the Local Master Announcement message to prevent broadcasting outside the local LAN segment. Therefore, the Local Master Announcement message is only broadcast within the local LAN segment. In step 510, the Host Announcement is broadcast to all LAN segments.

The present invention provides many advantages over existing systems and methods. The present invention does not require the broadcast of all broadcast messages to all segments in the network. The actual transfer of data among segments is only conducted where the cache stores outdated objects or the edge node does not have the requested object. In all other cases, a short message transfer is carried out among segments, thereby reducing message traffic. The delays of the transactions across the bottleneck interface are decreased resulting in a better experience when using SMB or other networked file system protocols. In addition, the caching method is completely transparent to the end hosts providing enhanced performance.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A method of reducing intranet traffic between two Local Area Network, LAN, segments in a telecommunications network where a link between the two LAN segments is a bottleneck link, the method **characterized in** comprising the following steps:
receiving, by a local edge node, from an initiator host, a request for an object from a host at a remote end, remote host, of the bottleneck link;
sending, by the local edge node, the request to the remote host;
checking, by the local edge node, whether the traffic on the bottleneck link requires the remote host to be emulated, and if so, sending the local edge node's address to the initiator host instead of the remote host address;
verifying, by the local edge node, whether the requested object is up to date and stored in a cache associated with the local edge node and
if so, sending the object to the requesting initiator node; or
if the requested object is not up to date, the local edge node retrieving the up to date object from the remote host, storing the up to date object in the cache and sending the up to date, requested object to the initiator host.

2. The method according to claim 1 wherein the step of determining if the object is up to date includes matching a timestamp of the contents of the object with a timestamp of the last modification of the object.

3. The method according to claim 1 or 2 wherein the step of requesting an object includes requesting address host information of the host having the requested object.

4. The method according to any of the preceding claims further comprising the step of storing name and address information associated with hosts in the network in a Local Master Browser, LMB, wherein the network utilizes Server Message Block, SMB, protocol.

5. The method according to claim 4 further comprising the steps of:
receiving, by the local edge node, a host announcement message from the remote host;
storing the name and address information of the remote host in the local edge node; and
forwarding the announcement message with the name and address of the local edge node to nodes in the two LAN segments, including the LMB.

6. The method of claim 4 or 5, wherein each LAN segment utilizes a local LMB.

7. The method of claim 4, 5 or 6, wherein upon a new host connecting to the network:
the new host broadcasting a Browser Elect Request message within the LAN;
filtering the Browser Elect Request message to prevent broadcast of the Browser Elect Request Message outside the LAN segment between the new host and the local edge node;
broadcasting a Local Master Announcement by a LMB located within the local LAN segment; and
broadcasting a Host Announcement to all LAN segments in the network.

8. A local edge node for use in a telecommunications network, for reducing intranet traffic between two Local Area Network, LAN, segments in the network where a link between the two LAN segments is a bottleneck link, the local edge node **characterized in** comprising:
means for receiving from an initiator host a request for an object from a host at a remote end, remote host, of the bottleneck link and sending the request to the remote host;
means for checking whether the traffic on the bottleneck link requires the remote host to be emulated, and if so,
the local edge node being arranged for
sending the local edge node address to the initiator host on behalf of the remote host; and
determining if the requested object is up to date and stored in a cache associated with the local edge node; if so, the local edge node sending the object to the requesting initiator node, if the object is not up to date, the local edge node retrieving the up to date object from the remote host, storing the up to date object in the cache and sending the up to date, requested object to the initiator host.

9. The local edge node according to claim 8, wherein the checking means further includes means for matching a timestamp of the contents of the requested object with a timestamp of the last modification of the requested object.

10. The local edge node according to claim 8 or 9, wherein the node further comprises means for requesting address host information of the host having the requested object.

11. The local edge node according to any of claims 8 to 10, wherein the network utilizes Server Message Block (SMB) protocol and
name and address information associated with hosts in the network are stored in a Local Master Browser (LMB).

12. The local edge node according to any of claims 8 to 11, further comprising:
receiving means for receiving a host announcement message from the remote host;
a cache for storing the name and address information of the remote host; and
means for forwarding the announcement message with the name and address of the local edge node to the LMB.

13. The local edge node of any of claims 8 to 12, wherein each LAN segment utilizes a local LMB.

14. The local edge node of any of claims 8 to 13, further comprising means for receiving a request from the remote host requesting emulating of the remote host.

15. The local edge node of any of claims 8 to 14, wherein the means for sending the request for an object includes means for requesting address host information of the host having the requested object.

16. The local edge node of any of claims 8 to 15, further comprising means for receiving a Browser Elect Request message, for connecting a new host to the network, broadcast within the LAN;
means for filtering the Browser Elect Request message to prevent broadcast of the Browser Elect Request Message outside the LAN segment between the new host and the local edge node;
means for communicating with a LMB, located within the local LAN segment, for broadcasting a Local Master Announcement ; and
the new host broadcasting a Host Announcement to all LAN segments in the network, wherein the Host Announcement is transmitted by the local edge node over the bottleneck link.

17. A system for reducing, in a telecommunications network, the intranet traffic between two Local Area Network, LAN, segments in the network where a link between the two LAN segments is a bottleneck link, the system **characterized in** comprising:
an initiator host for requesting an object from a host at a remote end, remote host, of the bottleneck link, wherein the request is sent to the remote host via a local edge node;
the local edge node according to any of claims 8 to 16.

18. The system according to claim 17, further comprising:
sending means in the remote host arranged for sending a Host Announcement message to the local edge node.

19. The system according to claim 17 or 18, wherein the remote host includes means for requesting emulating of the remote host; and/or
wherein the means for requesting an object includes means for requesting address host information of the host having the requested object.

20. The system of any of claims 17 to 19, further comprising means for connecting a new host to the network, the new host broadcasting a Browser Elect Request message within the LAN;
means for filtering the Browser Elect Request message to prevent broadcast of the Browser Elect Request Message outside the LAN segment between the new host and the local edge node;
a LMB, located within the local LAN segment, for broadcasting a Local Master Announcement; and
the new host broadcasting a Host Announcement to all LAN segments in the network, wherein the Host Announcement is transmitted by the local edge node ever the bottleneck link.

## Patentansprüche

1. Verfahren zum Reduzieren von Intranetverkehr zwischen zwei Local Area Network-, LAN-, Segmenten in einem Telekommunikationsnetzwerk, wobei ein Link zwischen den zwei LAN-Segmenten ein Engpasslink ist, und wobei das Verfahren **dadurch gekennzeichnet ist, dass** es die folgenden Schritte umfasst:
Empfangen, durch einen lokalen Randknoten, von einem Initiatorhost, einer Anforderung für ein Objekt von einem Host an einem entfernten Ende des Engpasslinks, dem Remotehost;
Senden, durch den lokalen Randknoten, der Anforderung an den Remotehost;
Überprüfen, durch den lokalen Randknoten, ob der Verkehr auf dem Engpasslink es verlangt, den Remotehost zu emulieren, und falls ja, Senden der Adresse des lokalen Randknotens an den Initiatorhost anstelle der Remotehostadresse;
Verifizieren, durch den lokalen Randknoten, ob das angeforderte Objekt auf dem neuesten Stand ist und in einem Cache abgespeichert ist, der zu dem lokalen Randknoten gehört, und
falls ja, Senden des Objekts an den anfordernden Initiatorknoten; oder wobei, falls das angeforderte Objekt nicht auf dem neuesten Stand ist, der lokale Randknoten das neueste Objekt von dem Remotehost abruft, das neueste Objekt in dem Cache abspeichert und das neueste, angeforderte Objekt an den Initiatorhost sendet.

2. Verfahren nach Anspruch 1, wobei der Schritt des Bestimmens, ob das Objekt auf dem neuesten Stand ist, ein Abgleichen eines Zeitstempels der Inhalte des Objekts mit einem Zeitstempel der letzten Änderung des Objekts beinhaltet.

3. Verfahren nach Anspruch 1 oder 2, wobei der Schritt des Anforderns eines Objekts das Anfordern von Adresshostinformation des Hosts, welcher das angeforderte Objekt besitzt, beinhaltet.

4. Verfahren nach einem der vorhergehenden Ansprüche, welches weiter den Schritt des Abspeicherns von Namens- und Adressinformationen, welche zu Hosts im Netzwerk gehören, in einem Local Master Browser, LMB, umfasst, wobei das Netzwerk das Server Message Block-, SMB-, Protokoll verwendet.

5. Verfahren nach Anspruch 4, welches weiter die Schritte umfasst:
Empfangen, durch den lokalen Randknoten, einer Host Announcement-Nachricht von dem Remotehost;
Abspeichern der Namens- und Adressinformation des Remotehosts in dem lokalen Randknoten; und
Weiterleiten der Announcement-Nachricht mit dem Namen und der Adresse des lokalen Randknotens an die Knoten in den zwei LAN-Segmenten, einschließlich des LMB.

6. Verfahren nach Anspruch 4 oder 5, wobei jedes LAN-Segment einen lokalen LMB verwendet.

7. Verfahren nach einem der Ansprüche 4, 5 oder 6, wobei auf das Verbinden eines neuen Hosts mit dem Netzwerk hin:
der neue Host eine Browser Elect Request-Nachricht innerhalb des LANs rundsendet;
die Browser Elect Request-Nachricht gefiltert wird, um eine Rundsendung der Browser Elect Request-Nachricht außerhalb des LAN-Segments zwischen dem neuen Host und dem lokalen Randknoten zu verhindern;
ein Local Master Announcement durch einen LMB, der sich innerhalb des lokalen LAN-Segments befindet, rundgesendet wird; und
ein Host Announcement an alle LAN-Segmente im Netzwerk rundgesendet wird.

8. Lokaler Randknoten für die Verwendung in einem Telekommunikationsnetzwerk zum Reduzieren von Intranetverkehr zwischen zwei Local Area Network-, LAN-, Segmenten in dem Netzwerk, wobei ein Link zwischen den zwei LAN-Segmenten ein Engpasslink ist, und wobei der lokale Randknoten **dadurch gekennzeichnet ist, dass** er umfasst:
Mittel zum Empfangen von einem Initiatorhost einer Anforderung für ein Objekt von einem Host an einem entfernten Ende des Engpasslinks, dem Remotehost, und Senden der Anforderung an den Remotehost;
Mittel zum Überprüfen, ob der Verkehr auf dem Engpasslink es verlangt, den Remotehost zu emulieren, und wobei, falls ja,
der lokale Randknoten eingerichtet ist zum
Senden der lokalen Randknotenadresse an den Initiatorhost für den Remotehost; und
Bestimmen, ob das angeforderte Objekt auf dem neuesten Stand ist und in einem Cache, der zu dem lokalen Randknoten gehört, abgespeichert ist; wobei, falls ja, der lokale Randknoten das Objekt an den anfordernden Initiatorknoten sendet und, falls das Objekt nicht auf dem neuesten Stand ist, der lokale Randknoten das neueste Objekt von dem Remotehost abruft, das neueste Objekt in dem Cache abspeichert und das neueste, angeforderte Objekt an den Initiatorhost sendet.

9. Lokaler Randknoten nach Anspruch 8, wobei die Mittel zum Überprüfen weiter Mittel zum Abgleichen eines Zeitstempels der Inhalte des angeforderten Objekts mit einem Zeitstempel der letzten Änderung des angeforderten Objekts beinhalten.

10. Lokaler Randknoten nach Anspruch 8 oder 9, wobei der Knoten weiter Mittel zum Anfordern von Adresshostinformation des Hosts, welcher das angeforderte Objekt besitzt, beinhaltet.

11. Lokaler Randknoten nach einem der Ansprüche 8 bis 10, wobei das Netzwerk das Server Massage Block (SMB)-Protokoll verwendet und
Namens- und Adressinformationen, die zu Hosts in dem Netzwerk gehören, in einem Local Master Browser (LMB) abgespeichert sind.

12. Lokaler Randknoten nach einem der Ansprüche 8 bis 11, welcher weiter umfasst:
Empfangsmittel zum Empfangen einer Host Announcement-Nachricht von dem Remotehost;
einen Cache zum Abspeichern der Namens- und Adressinformation des Remotehosts; und
Mittel zum Weiterleiten der Announcement-Nachricht mit dem Namen und der Adresse des lokalen Randknotens an den LMB.

13. Lokaler Randknoten nach einem der Ansprüche 8 bis 12, wobei jedes LAN-Segment einen lokalen LMB verwendet.

14. Lokaler Randknoten nach einem der Ansprüche 8 bis 13, welcher weiter Mittel zum Empfangen einer Anforderung von dem Remotehost umfasst, welche ein Emulieren des Remotehosts anfordert.

15. Lokaler Randknoten nach einem der Ansprüche 8 bis 14, wobei die Mittel zum Senden der Anforderung eines Objektes Mittel zum Anfordern von Adresshostinformation von dem Host, der das angeforderte Objekt besitzt, beinhalten.

16. Lokaler Randknoten nach einem der Ansprüche 8 bis 15, welcher weiter Mittel zum Empfangen einer Browser Elect Request-Nachricht umfasst, zum Verbinden eines neuen Hosts in das Netzwerk, die innerhalb des LAN rundgesendet wird;
Mittel zum Filtern der Browser Elect Request-Nachricht, um eine Rundsendung der Browser Elect Request-Nachricht außerhalb des LAN-Segments zwischen dem neuen Host und dem lokalen Randknoten zu verhindern;
Mittel zum Kommunizieren mit einem LMB, der sich innerhalb des lokalen LAN-Segments befindet, zum Rundsenden eines Local Master Announcement; und
wobei der neue Host ein Host Announcement an alle LAN-Segmente in dem Netzwerk rundsendet, wobei das Host Announcement von dem lokalen Randknoten über den Engpasslink übermittelt wird.

17. System zum Reduzieren, in einem Telekommunikationsnetzwerk, von Intranetverkehr zwischen zwei Local Area Network-, LAN-, Segmenten in dem Netzwerk, wobei ein Link zwischen den zwei LAN-Segmenten ein Engpasslink ist, und wobei das System **dadurch gekennzeichnet ist, dass** es umfasst:
einen Initiatorhost zum Anfordern eines Objekts von einem Host an einem entfernten Ende des Engpasslinks, dem Remotehost, wobei die Anforderung an den Remotehost über einen lokalen Randknoten gesendet wird;
den lokalen Randknoten nach einem der Ansprüche 8 bis 16.

18. System nach Anspruch 17, welches weiter umfasst:
Sendemittel in dem Remotehost, welche zum Senden einer Host Announcement-Nachricht an den lokalen Randknoten eingerichtet sind.

19. System nach einem der Ansprüche 17 oder 18, wobei der Remotehost Mittel zum Anfordern eines Emulierens des Remotehosts beinhaltet; und/oder
wobei die Mittel zum Anfordern eines Objekts Mittel zum Anfordern von Adresshostinformation von dem Host, der das angeforderte Objekt besitzt, beinhalten.

20. System nach einem der Ansprüche 17 bis 19, welches weiter Mittel zum Einbinden eines neuen Hosts in das Netzwerk umfasst, wobei der neue Host eine Browser Elect Request-Nachricht innerhalb des LANs rundsendet;
Mittel zum Filtern der Browser Elect Request-Nachricht, um eine Rundsendung der Browser Elect Request-Nachricht außerhalb des LAN-Segments zwischen dem neuen Host und dem lokalen Randknoten zu verhindern;
einen LMB, der sich innerhalb des lokalen LAN-Segments befindet, zum Rundsenden eines Local Master Announcement; und
wobei der neue Host ein Host Announcement an alle LAN-Segmente in dem Netzwerk rundsendet, wobei das Host Announcement von dem lokalen Randknoten über den Engpasslink übermittelt wird.

## Revendications

1. Procédé de réduction de trafic intranet entre deux segments de réseau local, RL, dans un réseau de télécommunications où une liaison entre les deux segments de RL est une liaison de goulot d'étranglement, le procédé étant **caractérisé en ce qu'**il comprend les étapes suivantes :
recevoir, par un noeud de bord local, en provenance d'un hôte initiateur, une requête d'objet issu d'un hôte à une extrémité distante, l'hôte distant, de la liaison de goulot d'étranglement ;
envoyer, par le noeud de bord local, la requête à l'hôte distant ;
contrôler, par le noeud de bord local, si le trafic sur la liaison de goulot d'étranglement nécessite que l'hôte distant soit émulé, et dans l'affirmative, envoyer l'adresse du noeud de bord local à l'hôte initiateur au lieu de l'adresse de l'hôte distant ;
vérifier, par le noeud de bord local, si l'objet demandé est à jour et stocké dans un cache associé au noeud de bord local et
dans l'affirmative, envoyer l'objet au noeud initiateur demandeur ; ou
si l'objet demandé n'est pas à jour, récupérer par le noeud de bord local l'objet à jour à partir de l'hôte distant, stocker l'objet à jour dans le cache et envoyer l'objet à jour demandé à l'hôte initiateur.

2. Procédé selon la revendication 1, dans lequel l'étape consistant à déterminer si l'objet est à jour comprend le fait de mettre en correspondance une estampille temporelle du contenu de l'objet avec une estampille temporelle de la dernière modification de l'objet.

3. Procédé selon la revendication 1 ou 2, dans lequel l'étape consistant à demander un objet comprend le fait de demander des informations d'adresse d'hôte de l'hôte ayant l'objet demandé.

4. Procédé selon l'une quelconque des revendications précédentes, comprenant en outre l'étape consistant à stocker des informations de nom et d'adresse associées à des hôtes du réseau dans un explorateur maître local, EML, dans lequel le réseau utilise le protocole Server Message Block, SMB.

5. Procédé selon la revendication 4, comprenant en outre les étapes consistant à:
recevoir, par le noeud de bord local, un message d'annonce d'hôte en provenance de l'hôte distant ;
stocker les informations de nom et d'adresse de l'hôte distant dans le noeud de bord local ; et
transférer le message d'annonce avec le nom et l'adresse du noeud de bord local à des noeuds dans les deux segments de RL, y compris l'EML.

6. Procédé selon la revendication 4 ou 5, dans lequel chaque segment de RL utilise un EML local.

7. Procédé selon la revendication 4, 5 ou 6, dans lequel lors de la connexion d'un nouvel hôte au réseau :
le nouvel hôte diffuse un message de requête d'élection d'explorateur au sein du RL ;
le message de requête d'élection d'explorateur est filtré pour empêcher une diffusion générale du message de requête d'élection d'explorateur à l'extérieur du segment de RL entre le nouvel hôte et le noeud de bord local ;
une annonce de maître local est diffusée par un EML situé au sein du segment de RL local ; et
une annonce d'hôte est diffusée à tous les segments de RL dans le réseau.

8. Noeud de bord local destiné à une utilisation dans un réseau de télécommunications, pour réduire le trafic intranet entre deux segments de réseau local, RL, dans le réseau où une liaison entre les deux segments de RL est une liaison de goulot d'étranglement, le noeud de bord local étant **caractérisé en ce qu'**il comprend :
un moyen destiné à recevoir en provenance d'un hôte initiateur une requête d'objet issu d'un hôte à extrémité distante, l'hôte distant, de la liaison de goulot d'étranglement et à envoyer la requête à l'hôte distant ;
un moyen destiné à contrôler si le trafic sur la liaison de goulot d'étranglement nécessite que l'hôte distant soit émulé, et dans l'affirmative,
le noeud de bord local étant agencé pour
envoyer l'adresse de noeud de bord local à l'hôte initiateur au nom de l'hôte distant ; et
déterminer si l'objet demandé est à jour et stocké dans un cache associé au noeud de bord local ; dans l'affirmative, le noeud de bord local envoyant l'objet au noeud initiateur demandeur, si l'objet n'est pas à jour, le noeud de bord local récupérant l'objet à jour à partir de l'hôte distant, stockant l'objet à jour dans le cache et envoyant l'objet à jour demandé à l'hôte initiateur.

9. Noeud de bord local selon la revendication 8, dans lequel le moyen de contrôle comprend en outre un moyen destiné à mettre en correspondance une estampille temporelle du contenu de l'objet demandé avec une estampille temporelle de la dernière modification de l'objet demandé.

10. Noeud de bord local selon la revendication 8 ou 9, dans lequel le noeud comprend en outre un moyen destiné à demander des informations d'adresse d'hôte de l'hôte ayant l'objet demandé.

11. Noeud de bord local selon l'une quelconque des revendications 8 à 10, dans lequel le réseau utilise le protocole Server Message Block (SMB) et
des informations de nom et d'adresse associées à des hôtes dans le réseau sont stockées dans un explorateur maître local (EML).

12. Noeud de bord local selon l'une quelconque des revendications 8 à 11, comprenant en outre :
un moyen de réception destiné à recevoir un message d'annonce d'hôte en provenance de l'hôte distant ;
un cache destiné à stocker les informations de nom et d'adresse de l'hôte distant ; et
un moyen destiné à transférer le message d'annonce avec le nom et l'adresse du noeud de bord local vers l'EML.

13. Noeud de bord local selon l'une quelconque des revendications 8 à 12, dans lequel chaque segment de RL utilise un EML local.

14. Noeud de bord local selon l'une quelconque des revendications 8 à 13, comprenant en outre un moyen destiné à recevoir une requête en provenance de l'hôte distant demandant l'émulation de l'hôte distant.

15. Noeud de bord local selon l'une quelconque des revendications 8 à 14, dans lequel le moyen destiné à envoyer la requête d'un objet comprend un moyen destiné à demander des informations d'adresse d'hôte de l'hôte ayant l'objet demandé.

16. Noeud de bord local selon l'une quelconque des revendications 8 à 15, comprenant en outre un moyen destiné à recevoir un message de requête d'élection d'explorateur, pour connecter un nouvel hôte au réseau, diffusé au sein du RL ;
un moyen destiné à filtrer le message de requête d'élection d'explorateur pour empêcher une diffusion générale du message de requête d'élection d'explorateur à l'extérieur du segment de RL entre le nouvel hôte et le noeud de bord local ;
un moyen destiné à communiquer avec un EML, situé au sein du segment de RL local, pour diffuser une annonce de maître local ; et
le nouvel hôte diffusant une annonce d'hôte à tous les segments de RL du réseau, dans lequel l'annonce d'hôte est transmise par le noeud de bord local sur la liaison de goulot d'étranglement.

17. Système destiné à réduire, dans un réseau de télécommunications, le trafic intranet entre deux segments de réseau local, RL, dans le réseau où une liaison entre les deux segments de RL est une liaison de goulot d'étranglement, le système étant **caractérisé en ce qu'**il comprend :
un hôte initiateur destiné à demander un objet à un hôte à une extrémité distante, l'hôte distant, de la liaison de goulot d'étranglement, dans lequel la requête est envoyée à l'hôte distant via un noeud de bord local ;
le noeud de bord local selon l'une quelconque des revendications 8 à 16.

18. Système selon la revendication 17, comprenant en outre :
un moyen d'envoi dans l'hôte distant, agencé pour envoyer un message d'annonce d'hôte au noeud de bord local.

19. Système selon la revendication 17 ou 18, dans lequel l'hôte distant comprend un moyen destiné à demander l'émulation de l'hôte distant ; et/ou
dans lequel le moyen destiné à demander un objet comprend un moyen destiné à demander des informations d'adresse d'hôte de l'hôte ayant l'objet demandé.

20. Système selon l'une quelconque des revendications 17 à 19, comprenant en outre un moyen destiné à connecter un nouvel hôte au réseau, le nouvel hôte diffusant un message de requête d'élection d'explorateur au sein du RL ;
un moyen destiné à filtrer le message de requête d'élection d'explorateur pour empêcher une diffusion générale du message de requête d'élection d'explorateur à l'extérieur du segment de RL entre le nouvel hôte et le noeud de bord local ;
un EML, situé au sein du segment de RL local, destiné à diffuser une annonce de maître local ; et
le nouvel hôte diffusant une annonce d'hôte à tous les segments de RL dans le réseau, dans lequel l'annonce d'hôte est transmise par le noeud de bord local sur la liaison de goulot d'étranglement.
